# EUROPEAN PATENT SPECIFICATION

(11) **EP 3 244 101 B1**
(45) Date of publication and mention of the grant of the patent: **30.10.2019**
(21) Application number: 17170785.4
(22) Date of filing: 12.05.2017
(51) Int. Cl.: F16J 15/3212, F16J 15/3236

(54) **SEAL ASSEMBLIES WITH FLEXIBLE LOCKING RINGS AND RELATED METHODS**
DICHTUNGSANORDNUNGEN MIT FLEXIBLEN VERRIEGELUNGSRINGEN UND ZUGEHÖRIGE VERFAHREN
ENSEMBLES D'ÉTANCHÉITÉ DOTÉS DE BAGUES DE VERROUILLAGE FLEXIBLES ET PROCÉDÉS ASSOCIÉS

(30) Priority: 13.05.2016 US 201662336162 P
(43) Date of publication of application: 15.11.2017
(73) Proprietor: Bal Seal Engineering, Inc., Foothill Ranch, CA 92610 (US)
(72) Inventor: BALSELLS, Peter J., Foothill Ranch, CA 92610 (US)
(74) Representative: Argyma

(56) References cited:
- US-A1- 2006 022 414
- US-B2- 9 234 591
- Nasuha Sa 'ude ET AL: "Flexural Properties of Copper-ABS in Metal Injection Molding Process For FDM Feedstock", , 30 June 2013 (2013-06-30), XP055409919, Retrieved from the Internet: URL:http://inpressco.com/wp-content/upload s/2013/06/Paper66582-586.pdf [retrieved on 2017-09-26]

## Description

### FIELD OF ART

Aspects of the present invention are directed to seal assemblies and related methods and more particularly to lip seals for sealing against a dynamic shaft or rod with locking rings having flexible properties to facilitate assembly and manufacturing.

### BACKGROUND

Conventional rotary seals may utilize a solid metal locking ring machined from rolled or drawn metal as a means for fixing a seal ring within and against a housing bore. A locking ring is typically press fit into the housing bore, and provides a load onto a segment of the seal ring and against the housing bore to retain the seal assembly in place for service. Conventionally speaking, rigid locking rings are thought to provide the most secured means for fixing the seal assembly in the housing bore, and they general are.

However due to the high elastic modulus values of metals, solid metal locking rings may require precise manufacturing with tight tolerances in order to achieve a good press fit into the housing bore. Conventional metal locking rings need to be machined in order to keep narrow tolerances, thus manufacturing may be costly and require longer manufacturing times. Furthermore, conventional metal locking rings are very rigid and may require very high installation forces to achieve press fit in the housing bore during assembly.

### SUMMARY

The assemblies and components of the present disclosure resolve the mentioned disadvantages by introducing locking rings with increased flexible properties, such as a reduced elastic modulus value, by manufacturing the ring body of the locking ring using a metal injection molding process. Reduced elastic modulus metal injection molded locking rings can allow for ease of installation due to lower installation forces required, which allow for larger manufacturing tolerances, ease of manufacturing, and lowered costs. In other examples, as further discussed below, the flexible properties can be obtained by forming a through cut through the ring body to decrease the hoop stress of the ring body.

Aspects of the present disclosure include a locking ring for use in a seal assembly with reduced installation forces and/or with improved ease of manufacturing compared to conventional locking rings machined from rolled or drawn metal, as a result of reduced elastic modulus achieved by manufacturing the locking ring by metal injection molding.

An aspect of the present disclosure is understood to include a locking ring made from a MIM process and having a reduced elastic modulus value, herein a MIM-produced locking ring. The MIM-produced locking ring can have a ring body with a loading ring and an end plate. An optional cantilever can be included. The cantilever can have a tip that points in the direction of the seal element or in the direction opposite the seal element.

The MIM-produced locking ring described herein can have a reduced elastic modulus value compared to a similar ring made from a machined rolled or drawn metal material made from conventional metalworking methods. The MIM-produced locking can be used with a seal ring to form a seal assembly, with or without a spring energizer.

Further aspects of the present disclosure include a seal assembly having a MIM-produced locking ring, a method for producing a locking ring using MIM process, a method of assembling a seal assembly with a MIM-produced locking ring, a method of using a MIM-produced locking ring, and a method of using a seal assembly comprising a MIM-produced locking ring. Other usages are contemplated.

The seal assemblies of the present disclosure can include a seal ring and a spring energizer. The MIM-produced locking ring can comprise a locking ring having the desired shape formed from a mold cavity or a machined locking ring having the desired shape formed from a MIM-produced bulk stock that has been machined. The mold for use in the MIM process can have multi-cavities for producing a plurality of locking rings or a plurality of MIM-produced metal stocks in a single injection.

An aspect of the present disclosure includes a locking ring for use in a seal assembly comprising a ring body having a loading ring extending from an end plate, said ring body manufactured by metal injection molding and having a reduced elastic modulus compared to a similar ring body made from a machined rolled or a drawn metal material.

The seal assembly can include a seal ring or seal element. The seal ring can comprise an inside flange with a seal lip, an outside flange, and a center channel section.

The seal ring can define a spring cavity having a spring energizer located therein. The spring cavity can also be called a seal cavity as the cavity is located with the seal element and has a cavity.

The spring energizer, which can be a canted coil spring, can bias against both the inside flange and the outside flange of the seal element.

The loading ring of the locking ring can extend into the spring cavity and the spring can bias against the loading ring.

The locking ring can have a cantilever spring or can be without a cantilever spring.

Further aspect of the present disclosure includes a method of manufacturing a locking ring for use in a seal assembly comprising: forming a mold block having at least one mold cavity; injecting a MIM feedstock comprising powder metallurgy into the at least one cavity to produce a ring body; removing the ring body from the mold block; and wherein the ring body has a grain size microstructure that is larger than a ring body made from rolled or drawn metal.

The mold block can comprise a plurality of cavities for producing a plurality of locking rings in a single injection.

A locking ring can be machined from a MIM-produced bulk stock to produce a final shape locking ring.

In some examples, the MIM-produced locking ring can be post-cured machined to final dimensions.

A still further aspect of the present invention includes a method of manufacturing a locking ring for use with a seal assembly increased flexibility and with reduced locking ring installation force needed to install the seal assembly comprising: producing bulk material from powdered metal utilizing the metal injection molding (MIM) process that produces larger grain size microstructure compared to rolled or drawn metal; and machining the locking ring from said bulk material.

Another aspect of the present invention includes a method of improving ease of installation of a locking ring in a seal assembly comprising manufacturing a reduced elastic modulus locking ring utilizing the metal injection molding (MIM) process that produces larger grain size microstructure compared to rolled or drawn metal.

In some examples, the locking ring can be made more flexible than a comparable locking ring made from a metal stock or from drawn metal by providing a through cut through the body of the locking ring.

A still further aspect of the present disclosure is a method of improving ease of manufacturing of a locking ring in a seal assembly comprising: manufacturing a reduced elastic modulus locking ring utilizing the metal injection molding (MIM) process that produces a larger grain size microstructure compared to rolled or drawn metal; and to allow for widened tolerances and without significantly increased installation force.

Another aspect of the present disclosure includes a seal assembly comprising: a locking ring comprising a ring body having a loading ring extending from an end plate, said ring body manufactured by metal injection molding (MIM) and having a reduced elastic modulus compared to a similar ring body made from machined rolled or drawn metal material.

The seal assembly can include a sealing element comprising a seal body comprising an inside flange with a sealing lip, an outside flange, and a center channel section located between the inside and outside flanges, said seal body can define a spring groove.

The locking ring can be in contact with the sealing element and wherein the loading ring can be located between the inside flange and the outside flange of the sealing element.

A cantilever spring can extend from the end plate of the ring body.

The ring body of the locking ring can be made from a metal material and the metal material can have an elastic modulus value that is about 20%-45% less than an elastic modulus value of a locking ring made from generally a same metal material using traditional metalworking methods.

A spring energizer can be located between the loading ring of the locking ring and the inside flange of the sealing element.

The spring energizer can be a canted coil spring, a V-spring, a U-spring, a ribbon spring, or an extension spring.

The ring body of the locking ring can comprise a through cut from an outermost diameter to an innermost diameter of the ring body.

The ring body with the through cut can function as a split ring type locking ring that can allow for easier installation and wider tolerances than similar locking ring without the through cut.

A further aspect of the present disclosure includes a method of manufacturing a seal assembly. The method can comprise: forming a mold block having at least one mold cavity; injecting a MIM feedstock comprising powder metallurgy into the at least one cavity to produce a ring body; removing the ring body from the mold block; wherein the ring body has a grain size microstructure that is larger than a ring body made from rolled or drawn metal.

The ring body of the locking ring can comprise a loading ring extending from an end plate.

The method can include the step of forming a sealing element comprising a seal body comprising an inside flange with a sealing lip, an outside flange, and center channel section located between the inside and outside flanges, said seal body defining a spring groove.

The method can further comprise attaching the locking ring to the sealing element and projecting the loading ring between the inside flange and the outside flange of the sealing element.

The method can further comprise forming a through cut through the ring body from an outermost diameter to an innermost diameter of the ring body.

The method can further comprise molding a cantilever spring with the end plate or machining a cantilever spring into the end plate.

The method can further comprise placing a canted coil spring, a V-spring, a U-spring, a ribbon spring, or an extension spring in between the loading ring of the locking ring and the inside flange of the sealing element.

A seal assembly provided in accordance with aspects of the invention, which can be used to seal a dynamic surface, such as a shaft or a pin, and can be a rotary seal assembly or a reciprocating seal assembly. In an example, the seal assembly can comprise a seal element, a locking ring element, and a spring element or spring energizer. The seal element can be referred to as a seal member or seal component. The locking ring element can be referred to as a rigid member or a locking ring.

The spring element or spring energizer can embody a number of different components that can generate a biasing force, which can include a V-spring, a U-spring, a ribbon spring, or a canted coil spring, which can be a radial canted coil spring, an axial canted coil spring, or a mixed radial/axial canted coil spring comprising a plurality of interconnected coils each canted generally along the same direction and each coil comprising a major axis and a minor axis. In some examples, the spring energizer can be an extension spring, such as a helical compression or tension spring, or an O-ring in a garter ring configuration.

In some examples, the spring energizer can comprise the type that has multi-canting directions along different canting planes, such as those disclosed in US Pub. No. 2015/0240900, or nested canted coil springs to extend the width of the overall coil, such as those disclosed in US Pub. No. 2015/0316115, the contents of each of which are expressly incorporated herein by reference.

Still optionally, the spring energizer can be of a complex shape to form line and/or extended point contacts as disclosed in US pending Ser. No. 15/451,732, filed March 7, 2017, the contents of which are expressly incorporated herein by reference. The spring energizer or spring element of the present embodiment can be of the type that contacts and biases against both the inside flange of the seal element as well as the locking ring, if incorporated, or against the outside flange of the seal element if the locking ring is not incorporated. When incorporated, the spring energizer can provide a load against the sealing component, such as the inside flange, the outside flange, and/or the locking ring, to exert a spring force to the sealing component to seal against the housing and/or the shaft.

The seal element can have a seal body with an inner flange with a seal lip, an outer or outside flange, and a center channel section, which together can define a spring groove for accommodating a spring energizer.

The terms inner and outer, such as inner and outer flanges, can be understood to mean relative to the bore center of the seal element and, in some cases, relative to another structure. For example, an inner flange of a seal element can have an inner flange inner surface and an inner flange outer surface. The "inner flange" is relative to the bore center whereas the inner flange inner surface and an inner flange outer surface are relative to one another and to the bore center.

Because the spring groove is defined by the seal body of the sealing element, the spring groove may be referred to as a seal groove, which is understood to be a groove formed by the seal body and configured for accommodating a spring energizer.

The inner flange defines a bore for mounting around a dynamic pin or shaft, which can rotate or translate. The seal lip or sealing lip of the inner flange can have a different contour than the inner surface of the inside flange that defines the bore. For example, the inside or inner surface that defines the bore can be a non-straight line and can have one or more inflection points.

The one or more inflection points allow the seal element to form a seal lip at the inside flange to seal against a dynamic shaft along a smaller contact area than the entire length of the inside flange or for a relative longer length of the inside flange than a raised surface area formed by the one or more inflection points. Seal rings or seal elements and spring energizers described herein can be made from known prior art materials.

In an example, the locking ring can comprise a ring body having a loading ring and an end plate extending from the loading ring and having a cantilever or cantilever spring extending from an outer radial section or end thereof. The length of the end plate in the direction of the bore center can determine the size of the opening to the spring groove. For a small spring groove opening, the more difficult it is for the spring energizer to spring out of place during use and/or installation. Conversely, a larger spring groove opening will readily allow the spring energizer to pop out of the spring groove. The ring body may sometime be referred to simply as the body of the locking ring.

The outer surface of the cantilever spring can be configured to press radially against an interior surface of a gland, housing or seal box (not shown), such as a stuffing box or a seal chamber, to retain the seal assembly to the gland. In an example, the tip of the cantilever can point at the seal element but can point in the opposite direction, such as away from the seal element. The cantilever spring can spring load the locking ring against the housing, when the seal assembly is mounted inside the housing or gland, and can indirectly load against the shaft when the spring energizer is pushed against the loading ring and then against the inside flange of the seal element to push the sealing lip of the inside flange into sealing engagement with the shaft.

The loading ring of the locking ring can project into the spring groove between the inner flange and the outer flange. Because the loading ring can be located in the spring groove, the loading ring can form part of the spring groove. For example, the presence of the loading ring can decrease the space of the spring groove defined by the sealing element and the loading ring therefore can contribute to the shape or size of the spring groove. The inner surface of the loading ring, the surface closest to the center of the bore, can form a surface of the spring groove.

A canted coil spring can be used with the seal assembly and configured to exert a radial spring force against both the inner flange and against the loading ring, if a locking ring is present, otherwise against the outer flange. The loading ring can have a generally constant width, can have curves, and/or can have edges. As shown, the inside surface of the loading ring, inside relative to the center of the bore, can be contoured so as to form a shaped mating surface for contacting by a spring energizer.

In an example, the locking ring can be made from a metal material. In a particular example, the locking ring can be made from a metal material in a metal injection molding (MIM) process. A MIM process is a metal working process, such as metal injection molding process, in which small powdered metal particulates, such as fine-powdered metal, is mixed with an effective amount of binder agent in an injection process similar to plastic injection molding of plastic parts. The MIM process can be used with a multi-cavity mold to form a plurality of complex molded parts in a relatively high volume per injection cycle. MIM feedstock, called powder metallurgy, for use to produce the locking rings of the present disclosure can contain the same alloying constituents as traditional metalworking methods to produce any number of end metal locking ring products having different metal makeups and properties. For example, the locking rings can be made with different grades of steel, different grades of stainless steel, and different alloys, including can include a soft metal such as copper.

Thus, the locking rings of the present disclosure for use with seal assemblies can be different from prior art locking rings in that prior art locking rings are typically machined whereas the present locking rings can be formed by metal injection molding, and in relative high volume production by injecting the metal powder in a multi-cavity mold.

In an example, a MIM-produced locking ring can be formed by an injection process and can be ready for use with no or with very little post injection machining. In some examples, post molding machining of the MIM-produced part may be necessary to form the final desired shape or dimension. In still other examples, the locking ring can be made from an injection molding process but with a plastic material or a combination of plastic feeds.

The locking rings of the present disclosure can also be different in that they have a relatively lower elastic modulus than cast or machined locking rings using classic metalworking methods, which makes the present MIM-produced locking rings less hard and can improve installation while still serve their primary purpose of retaining seal assemblies inside respective glands, as further discussed below.

The present MIM-produced locking rings can be formulated to be within about 2-6% or greater of the elastic modulus of annealed parts using classic metalworking methods. For example, if the elastic modulus of an annealed part has a value of 6.8 x10⁷ kPA (10x10⁶ psi), the elastic modulus value of the MIM-produced part can be about 3.7 x10⁷ kPA (5.5 x10⁶ psi) to about 4.8 x10⁷ kPA (7x10⁶ psi).

A locking ring made from a MIM process can be expected to have a reduced elastic modulus compared to a similar shaped locking ring made from nearly the same metal materials but via machining from a metal stock. The reduced elastic modulus metal injected molded locking ring may be snap fit with a segment of the sealing ring or sealing element. Further, due to the reduced elastic modulus, the cantilever spring can readily deflect to have a press fit with a stuffing box, gland, or seal box.

To produce a relatively constant force on the seal lip of the inside flange of the sealing ring or element, a spring energizer, such as a canted coil spring, may be used with the MIM-produced locking ring. The reduced elastic modulus of the metal injection molded locking ring may aid the locking ring to be installed more easily and with less force as compared to that of a solid rolled or drawn metal locking ring of similar structure.

For example, when two nearly identical locking rings are used with two nearly identical sealing elements and spring energizers are compared, one produced by a MIM process and the other by machining a metal stock produced by traditional metalworking methods, the MIM-produced locking ring with the cantilever spring will be easier to install in a gland due to the relatively softer and more flexible material.

Thus, by utilizing a locking ring with a reduced elastic modulus, more consistent installation forces can be expected as slight dimensional variation in a lower elastic modulus material will have less impact on the required force for a press fit installation than the same dimensional variation in a higher elastic modulus material.

A MIM produced locking ring with a reduced elastic modulus also allows wider tolerances when manufacturing the locking ring without drastic change of installation force due to the greater compressibility and deflection, and maintains intimate contact and retention on a sealing surface within a housing bore. A wider tolerance may also reduce manufacturing costs and ease of manufacturing.

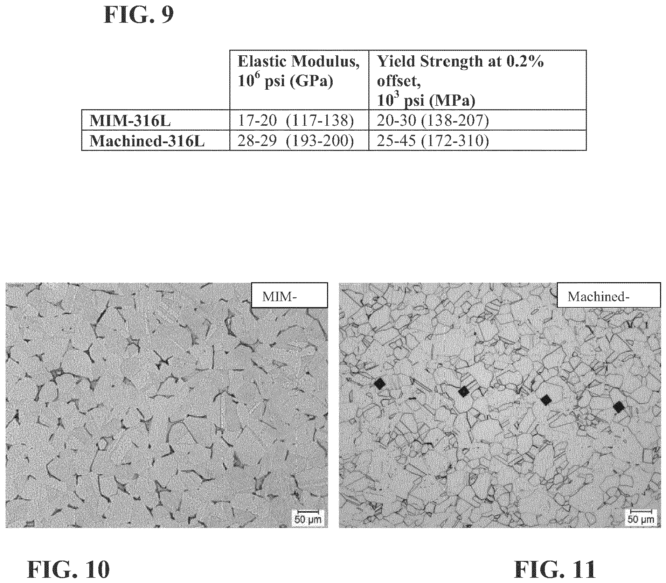

Images of metal grain sizes for a MIM produced metal object and from traditional metalworking methods are shown in the drawing figures. The reduced elastic modulus metal injected molded locking ring manufactured by metal injection molding process (MIM) produces a microstructure with larger grain sizes (See, FIG. 10) compared to rolled or drawn metal (See, FIG. 11).

As shown in FIG. 10, an object made from 316L stainless steel using a MIM process has an average grain size of about 50µm compared to the average grain size of a round bar of the same material but produced by traditional metalworking methods of about 20µm. The larger average grain size for the material using the MIM process implies larger spacing between the grains, which results in a lower elastic modulus material.

With reference to FIG. 9, a table is shown with typical mechanical properties of 316L stainless steel achieved by a MIM process and rolled or drawn metal bars (hot or cold finished) according to ASTM B783 and ASTM A276, respectively. As shown in FIG. 9, the MIM process produces a structure having a material or mechanical property with a lower elastic modulus value than its rolled or drawn metal counterpart. Thus, locking rings of the present disclosure made by a MIM process can be expected to require lower forces to deform the same amount as similarly shaped locking rings made of a machined rolled or drawn metal material.

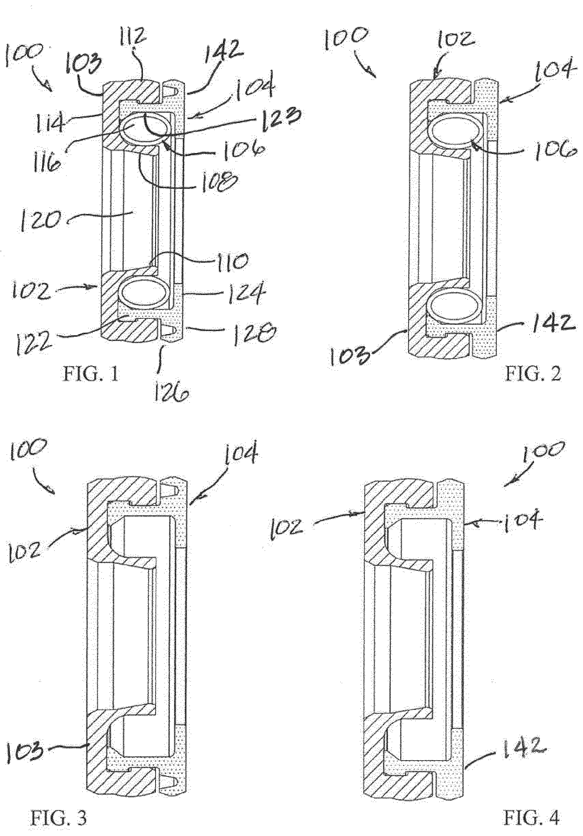

Therefore, lower insertion forces can be achieved with locking rings made of MIM-produced elements when installing in a gland. For example, when inserting the seal assembly of FIG. 1 into a stuffing box, a relatively lower force is needed to deflect the cantilever spring of the locking ring to set the seal assembly within the stuffing box than for a comparable seal assembly in which the locking ring is made from machined rolled or drawn metal material. Such characteristics may aid in lowering manufacturing costs as relatively looser tolerance is permitted, and allow greater ease of seal installation. For example, press fitting a reduced elastic modulus metal injection molded locking ring into a housing bore may not require as tight of a dimensional tolerance due to its more flexible characteristic.

In accordance with aspects of the present disclosure, locking rings as shown and described herein are formed by a MIM process in bulk, such as in a multi-cavity mold to form multiple locking ring parts or ring bodies for every injection cycle. After the locking rings are cooled and released from the mold, the locking rings can require zero or little post injection machining to produce the final working components, such as shown in FIGs. 1-8 and 12-14.

In another example, a MIM process yields bulk metal objects made by metal injection molding. The bulk metal objects made using the MIM process are then machined as necessary into a final working shape, such as to a final shape locking ring resembling that of FIG. 1. With the reduced elastic modulus characteristic from the MIM process, the then machined MIM-produced bulk metal object produces a final shape locking ring that can provide the mentioned benefits as well as allow greater ease in fabricating compared to starting from a metal stock made from traditional metalworking methods.

Said differently, a machined locking ring of the present disclosure can have a reduced elastic modulus value when machining the locking ring from a bulk stock material made from a MIM process compared to from a metal stock made from traditional metalworking methods. The locking ring machined part can have any desired shape, including without a cantilever spring or with a cantilever spring, as further discussed below.

An aspect of the present disclosure is therefore understood to include a locking ring for use with a seal ring, said locking ring being made at least in part from a MIM process and having a reduced elastic modulus value compared to a similar locking ring made from a machined rolled or drawn metal material. In some examples, the MIM-produced locking ring is produced with little to no post injection molding machining.

By little, it is understood that the locking ring can be machined to have fine or precise machining surfaces or tolerances. In other examples, the MIM-produced locking ring is produced by obtaining a MIM processed bulk metal object and then machining the bulk metal object to a final shape/form for use as a locking ring in a seal assembly. For example, the OD, ID, and/or loading ring of a locking ring can be machined to final dimensions. In another example, the cantilever spring can be machined from the MIM processed bulk metal object to produce a final locking ring with a cantilever spring.

Further aspects of the present disclosure include a seal assembly having a MIM-produced locking ring, a method for producing a locking ring using MIM, a method of assembling a seal assembly with a MIM-produced locking ring, a method of using a MIM-produced locking ring, and a method of using a seal assembly comprising a MIM-produced locking ring. The seal assembly can include a seal ring, a locking ring, and a spring energizer.

Optionally, a backing ring can further be incorporated to support the seal element from high pressure extrusion, such as a backing disclosed in U.S. Patent No. 9,234,591, the contents of which are expressly incorporated herein by reference. The backing ring can have an inside flange to support at least part of the inside flange of the seal element and can include a center channel section to support the center channel section of the seal element. Optionally, the seal element and the backing ring, when incorporated, can be mechanically engaged to one another. The MIM-produced locking ring can comprise a locking ring having the desired shape formed from a mold cavity or from a MIM-produced bulk stock that has been machined.

An alternative seal assembly can comprise a seal element, a locking ring, and a spring energizer. In the present alternative seal assembly, the locking ring is a MIM-produced locking ring with a reduced elastic modulus value and without a cantilever. The locking ring can be assembled to a seal ring or seal element and can include an optional spring energizer. The body of the MIM-produced locking ring can be wholly produced with little or no post injection machining, or by machining a MIM processed bulk metal object. Even without a cantilever spring and due to the relatively lower modulus of elasticity value, the MIM-produced locking ring 104 of the present embodiment can press fit into a gland or a housing without a cantilever spring.

FA further alternative seal assembly comprises a seal element and a locking ring having a body. The present seal assembly utilizes a MIM-produced locking ring with a reduced elastic modulus value and with a cantilever spring. In the seal assembly of the present embodiment, a spring energizer can be omitted.

A still further alternative seal assembly utilizes a MIM-produced locking ring with a reduced elastic modulus value, is without a cantilever spring, and is without a spring energizer. Said differently, the present seal assembly can be similar to the seal assembly of FIG. 2 but without a spring energizer. Optionally, a backing ring can be included to provide backing support for the seal element. The backing ring can optionally be included for any of the seal assemblies described herein.

An embodiment of a MIM-produced locking ring can comprise a cantilever spring produced through or by direct injection molding in a mold cavity or by machining a MIM-produced bulk material object. Where a MIM-produced locking ring is obtained or manufactured by direct injection of a MIM feedstock, the end product may further be machined to modify the molded shape from a first molded shape to a second shape formed by machining. Said differently, a locking ring of the present invention for use with a seal element can have a first shape formed by a metal injection molding (MIM) process and a second shape formed by machining, such as with a lathe or a computer numerical control (CNC) machine. In some examples, the locking ring has a final shape formed by a metal injection molding (MIM) process without any machining.

The various contours and shapes of a locking ring can be adjusted or modified to fit different seal elements, different spring energizers, and/or different sealing applications. For example, the inside surface of a loading ring can be injection molded and/or machined to accommodate different energizers and the outside surface of the loading ring can be molded and/or machined to engage seal elements having different shaped outside flanges. As shown, the outside surface of the locking ring can be provided with a groove for latching or locking engagement with the outside flange of the sealing element, such as the radial inward projection of the outside flange.

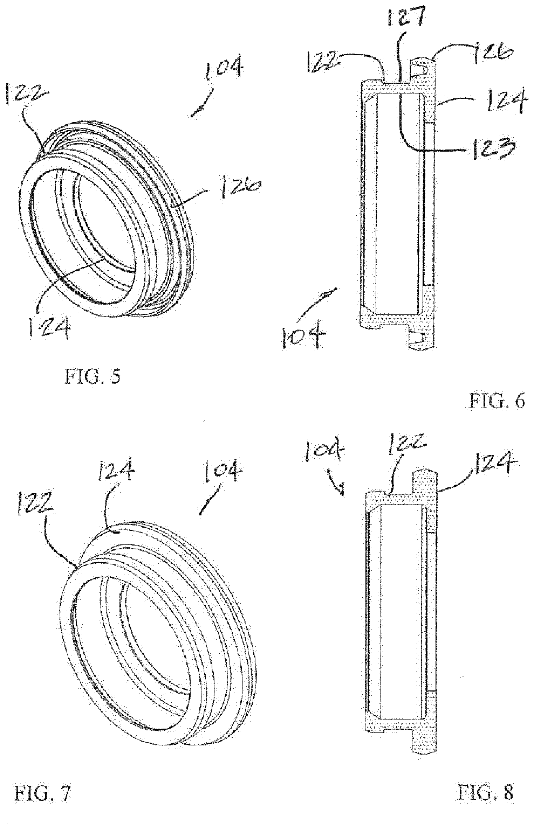

A further locking ring of the present disclosure can be without a cantilever spring. Thus, like the locking ring of FIGs. 5 and 6, the locking ring of the present embodiment for use with a seal element can have a first shape formed by a metal injection molding (MIM) process and a second shape formed by machining, such as with a lathe or a computer numerical control (CNC) machine. In some examples, the locking ring has a final shape formed by a metal injection molding (MIM) process without any machining.

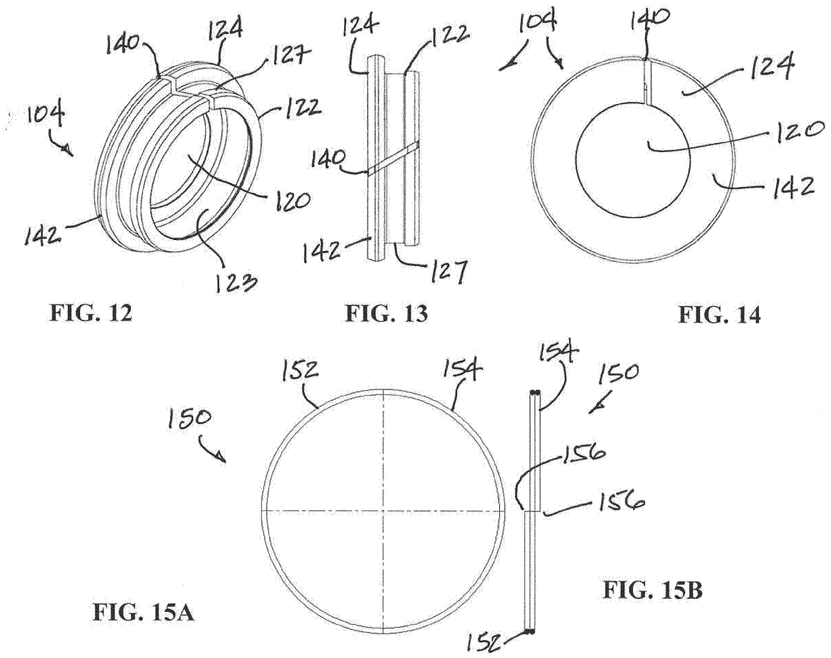

A locking ring in accordance to further aspects of the invention has an end plate and a loading ring with an exterior surface and an interior surface, both relative to the center of the bore. The locking ring can be similar to the locking ring of FIGs. 7 and 8 in that the cantilever spring can be omitted. Optionally, a cantilever spring can be included and the alternative locking ring of the present embodiment of FIGs. 12-14 resembling the locking ring of FIGs. 5 and 6. The present locking ring can be used with a seal element in a seal assembly. The seal assembly can include a spring energizer.

A locking ring in accordance with aspects of the present invention can be a MIM-produced locking ring produced through or by direct injection molding in a mold cavity or by machining a MIM-produced bulk material object. Optionally, the present locking ring can be machined from a metal stock made from traditional metalworking methods.

Where the MIM-produced alternative locking ring is obtained or manufactured by direct injection of a MIM feedstock, the end product may further be machined to modify the molded shape from a first molded shape to a second shape formed by machining. Said differently, a locking ring of the present embodiment for use with a seal element can have a first shape formed by a metal injection molding (MIM) process and a second shape formed by machining, such as with a lathe or a computer numerical control (CNC) machine.

In some examples, the locking ring of the present embodiment can have a final shape formed by a metal injection molding (MIM) process without any machining. Thus, the present locking ring can be similar to other locking rings discussed elsewhere herein with reference to FIGs. 1-11. However, in the present embodiment, a through cut can be provided through the body of the locking ring from an outermost diameter to an innermost diameter of the locking ring. More specifically, a through cut can be formed through the end plate and through the loading ring to form or to convert the locking ring into a split ring type locking ring.

Said differently, in the present embodiment, the body of the locking ring can be non-continuous along the circumference of the body about the center of the bore to produce a flexible locking ring, whether made from a MIM-produced material or from a metal stock formed from traditional metalworking methods. The through cut allows the locking ring to expand or contract at the cut and be more flexible than a ring without a cut. The ring with the cut has a much lower hoop stress than the ring without the cut.

In an example, the through cut can be made following the MIM process to produce the locking ring or following machining of the locking ring from a metal stock. The cut can be a simple straight cut in which the cut line is substantially parallel to the bore centerline. In an alternative embodiment, the through cut can be a scarf cut in which the cut line is angled to the bore centerline. A scarf cut can resemble a cut made to join two length sections together, such as to join two wood sections together.

The split ring type locking ring of the present embodiment can have a lower compression and expansion characteristics, in addition to the relatively lower modulus of elasticity as a result of being formed by a MIM process. Thus, the present split ring type locking ring can be more flexible than a conventional solid metal locking ring formed by machining a metal stock made from traditional metalworking methods and without a through cut. The present split ring type locking ring can also be more flexible than MIM-produced locking rings without a through cut. The increased flexible characteristics of the present split ring type locking ring allows for easier installation and wider tolerances.

Thus, a locking ring of the present embodiment can be used with a seal element in a seal assembly and wherein a ring body of the locking ring can comprise a through cut to define a split ring. The through cut can form through the outermost diameter of the ring body to the innermost diameter of the ring body to form a locking ring that is more flexible compared to a similar ring body without said cut.

The present embodiment includes a method of improving ease of installation of a locking ring in a seal assembly comprising manufacturing a flexible locking ring comprising a ring body and making a through cut through said ring body from an outermost diameter to an innermost diameter of said ring body. Said ring body can include a cantilever spring. Said ring body can include a loading ring. Said loading ring can include an inner surface and an outer surface. Said outer surface can include a groove for latching or locking engagement with a projection on a seal element.

The present embodiment can include a method of improving ease of manufacturing of a locking ring in a seal assembly comprising manufacturing a flexible locking ring comprising a ring body and making a through cut through said ring body from an outermost diameter to an innermost diameter of said ring body to allow for widened tolerances and reduction in installation force required to mount the locking ring, and hence a seal assembly, inside a gland or a housing.

Aspects of the present invention further includes a wire loop element. In an example, the wire loop element is formed by coiling a wire, such as a metal wire, into a loop to form a loop body with at least one full revolution with two free ends, similar to a key chain ring. In example, the wire can form 1.1 to greater number of revolutions to produce the wire loop element of the present embodiment with two free ends (FIG. 15B).

In some examples, the wire can form 1.6 or more revolutions, such as two to three revolutions, to produce the wire loop element of the present embodiment with two free ends. The wire loop element of the present embodiment with two free ends is more flexible to a similar wire loop element but where the two ends are connected or are not free to independently move.

The wire loop element of the present embodiment can function like a locking ring described elsewhere herein. For example, the wire loop element of the present embodiment can function like a split ring type locking ring of FIGs. 12-14 in that the two free ends allow the loop body of the wire loop element to be compressed or expanded.

Using the loop body's ability to compress or expand, the biasing force generated thereby can provide a load on a seal element, similar to that of the locking rings discussed elsewhere herein. For example and with reference to FIG. 1, the wire loop element can be sized to fit in the spring groove, between the inside flange and the outside flange of the seal element, to exert an outward force against the inner surface of the outside flange so as to bias the outside flange against a gland or a housing. Alternatively, the wire loop element can be sized to fit in the spring groove, between the inside flange and the outside flange of the seal element, to exert a radial force against the inner surface of the inside flange so as to bias the inside flange against a shaft.

The wire loop element of the present embodiment can provide similar functions to a locking ring but may be made from wire and thus easily produced, allowing for easier installation and wider tolerances. In an example, the sealing component or seal element is provided with a groove, such as on the inside flange or the outside flange of the sealing element, for capturing said wire loop element.

An aspect of the present therefore includes a method of improving ease of installation of a locking ring in a seal assembly comprising manufacturing a flexible locking ring comprising a wire loop element having at least one full revolution with two free ends and forming said wire loop element such that the loop body of said wire loop element is compressible or expandable to a smaller or larger diameter, respectively.

An aspect of the present disclosure further includes a method of improving ease of manufacturing of a locking ring in a seal assembly comprising manufacturing a flexible locking ring comprising a wire loop element having at least one full revolution with two free ends and forming said wire loop element such that the loop body of said wire loop element is compressible or expandable to a smaller or larger diameter, respectively, and allowing for widened tolerances and without significantly increased installation force.

Methods of using a locking ring, of making a locking, and of assembling a locking ring, such as one of the locking rings disclosed herein with a seal element in a seal assembly, are considered within the scope of the present invention.

### BRIEF DESCRIPTION OF THE DRAWINGS

These and other features and advantages of the present devices, systems, and methods will become appreciated as the same becomes better understood with reference to the specification, claims and appended drawings wherein:
FIG. 1 shows a cross-section of a spring energized seal assembly with a reduced modulus metal locking ring comprising a cantilever.
FIG. 2 shows a cross-section of a spring energized seal assembly with a reduced modulus metal locking ring without a cantilever.
FIG. 3 shows a cross-section of a seal assembly with a reduced modulus metal locking ring comprising a cantilever.
FIG. 4 shows a cross-section of a seal assembly with a reduced modulus metal locking ring without a cantilever.
FIG. 5 shows a locking ring comprising a cantilever.
FIG. 6 shows a cross-section of a reduced modulus metal locking ring comprising a cantilever.
FIG. 7 shows a locking ring without a cantilever.
FIG. 8 shows a cross-section of a reduced modulus metal locking ring without a cantilever.
FIG. 9 shows typical mechanical properties for MIM and annealed round bar made of 316L material.
FIG. 10 shows a micrograph comparison of MIM 316L material.
FIG. 11 shows a micrograph comparison of machined 316L material.
FIGs. 12-14 show different views of an alternative locking ring, which has a through cut.
FIGs. 15A and 15B show different views of a wire loop element usable to bias a seal element of a seal assembly.

### DETAILED DESCRIPTION

The detailed description set forth below in connection with the appended drawings is intended as a description of the presently preferred embodiments of lip seal assemblies and their components provided in accordance with aspects of the present devices, systems, and methods and is not intended to represent the only forms in which the present devices, systems, and methods may be constructed or utilized. The description sets forth the features and the steps for constructing and using the embodiments of the present devices, systems, and methods in connection with the illustrated embodiments. It is to be understood, however, that the same or equivalent functions and structures may be accomplished by different embodiments that are also intended to be encompassed within the spirit and scope of the present disclosure. As denoted elsewhere herein, like element numbers are intended to indicate like or similar elements or features.

FIG. 1 shows a cross-section of a spring energized seal assembly 100 provided in accordance with aspects of the invention, which can be used to seal a dynamic surface, such as a shaft or a pin, and can be a rotary seal assembly or a reciprocating seal assembly. In an example, the seal assembly 100 can comprise a seal element 102, a locking ring element 104, and a spring element or spring energizer 106. The seal element 102 can be referred to as a seal member or seal component. The locking ring element 104 can be referred to as a rigid member or locking ring. The spring element or spring energizer 106 can embody a number of different components that can generate a biasing force, which can include a V-spring, a U-spring, a ribbon spring, or a canted coil spring, which can be a radial canted coil spring, an axial canted coil spring, or a mixed radial/axial canted coil spring comprising a plurality of interconnected coils each canted generally along the same direction and each coil comprising a major axis and a minor axis. In some examples, the spring energizer can be an extension spring, such as a helical compression or tension spring, or an O-ring in a garter ring configuration.

In some examples, the spring energizer 106 can comprise the type that has multi-canting directions along different canting planes, such as those disclosed in US Pub. No. 2015/0240900, or nested canted coil springs to extend the width of the overall coil, such as those disclosed in US Pub. No. 2015/0316115, the contents of each of which are expressly incorporated herein by reference. Still optionally, the spring energizer 106 can be of a complex shape to form line and/or extended point contacts as disclosed in US pending Ser. No. 15/451,732, filed March 7, 2017, the contents of which are expressly incorporated herein by reference. The spring energizer or spring element 106 of the present embodiment can be of the type that contacts and biases against both the inside flange of the seal element as well as the locking ring, if incorporated, or against the outside flange of the seal element if the locking ring is not incorporated. When incorporated, the spring energizer provides a load against the sealing component, such as the inside flange, the outside flange, and/or the locking ring, to exert a spring force to the sealing component to seal against the housing and/or the shaft.

The seal element 102 can have a seal body 103 with an inner flange 108 with a seal lip 110, an outer or outside flange 112, and a center channel section 114, which together define a spring groove 116 for accommodating a spring energizer. The terms inner and outer, such as inner and outer flanges, can be understood to mean relative to the bore center of the seal element 102 and, in some cases, relative to another structure. For example, an inner flange can have an inner flange inner surface and an inner flange outer surface. The "inner flange" is relative to the bore center whereas the inner flange inner surface and an inner flange outer surface are relative to one another and to the bore center.

Because the spring groove 116 is defined by the body 103 of the sealing element, the spring groove may be referred to as a seal groove, which is understood to be a groove formed by the seal body 103 and for accommodating a spring energizer. The inner flange 108 defines a bore 120 for mounting around a dynamic pin or shaft, which can rotate or translate. The seal lip or sealing lip 100 of the inner flange can have a different contour than the inner surface of the inside flange 108 that defines the bore 120. For example, the inside or inner surface that defines the bore can be a non-straight line and can have one or more inflection points. The one or more inflection points allow the seal element 102 to form a seal lip at the inside flange to seal against a dynamic shaft along a smaller contact area than the entire length of the inside flange or for a relative longer length of the inside flange than a raised surface area formed by the one or more inflection points. Seal rings or seal elements 102 and spring energizers 106 described herein can be made from known prior art materials.

In an example, the locking ring 104 comprises a ring body 142 having a loading ring 122 and an end plate 124 extending from the loading ring and having a cantilever or cantilever spring 126 extending from an outer radial section or end 128 thereof. The length of the end plate 124 in the direction of the bore center can determine the size of the opening to the spring groove 116. For a small spring groove opening, the more difficult it is for the spring energizer to spring out of place during use and/or installation. Conversely, a larger spring groove opening will readily allow the spring energizer to pop out of the spring groove. The ring body 142 may sometime be referred to simply as the body 142 of the locking ring.

The outer surface of the cantilever spring 126 is configured to press radially against an interior surface of a gland, housing or seal box (not shown), such as a stuffing box or a seal chamber, to retain the seal assembly 100 to the gland. In an example, such as shown, the tip of the cantilever 126 points at the seal element 102 but can point in the opposite direction, such as away from the seal element. The cantilever spring can spring load the locking ring 104 against the housing, when the seal assembly is mounted inside the housing or gland, and can indirectly load against the shaft when the spring energizer is pushed against the loading ring 122 and then against the inside flange of the seal element to push the sealing lip of the inside flange into sealing engagement with the shaft.

As shown, the loading ring 122 of the locking ring 104 projects into the spring groove 116 between the inner flange 108 and the outer flange 112. Because the loading ring 122 is located in the spring groove 116, the loading ring 122 can form part of the spring groove 116. For example, the presence of the loading ring 122 can decrease the space of the spring groove 116 defined by the sealing element and the loading ring 122 therefore can contribute to the shape or size of the spring groove. The inner surface of the loading ring 122, the surface closest to the center of the bore, can form a surface of the spring groove. The canted coil spring 106 is configured to exert a radial spring force against both the inner flange 108 and against the loading ring 122, if present, otherwise against the outer flange 112. The loading ring 122 can have a generally constant width, can have curves, and/or can have edges. As shown, the inside surface 123 of the loading ring 122, inside relative to the center of the bore 120, is contoured so as to form a shaped mating surface for contacting by a spring energizer 106.

In an example, the locking ring 104 is made from a metal material. In a particular example, the locking ring 104 is made from a metal material in a metal injection molding (MIM) process. A MIM process is a metal working process, such as metal injection molding process, in which small powdered metal particulates, such as fine-powdered metal, is mixed with an effective amount of binder agent in an injection process similar to plastic injection molding of plastic parts. The MIM process can be used with a multi-cavity mold to form a plurality of complex molded parts in relatively high volume per injection cycle. MIM feedstock, called powder metallurgy, for use to produce the locking rings of the present disclosure can contain the same alloying constituents as traditional metalworking methods to produce any number of end metal locking ring products having different metal makeups and properties. For example, the locking rings can be made with different grades of steel, different grades of stainless steel, and different alloys, including soft metal such as copper.

Thus, the locking rings 104 of the present disclosure for use with seal assemblies are different from prior art locking rings in that prior art locking rings are typically machined whereas the present locking rings can be formed by metal injection molding, and in relative high volume production by injecting in a multi-cavity mold. In an example, a MIM-produced locking ring can be formed by an injection process and can be ready for use with no or with very little post injection machining. In some examples, post molding machining of the MIM-produced part may be necessary to form the final desired shape or dimension. In still other examples, the locking ring can be made from an injection molding process but with a plastic material or a combination of plastic feeds.

The locking rings 104 of the present disclosure are also different in that they have a relatively lower elastic modulus than cast or machined locking rings using classic metalworking methods, which makes the present MIM-produced locking rings less hard and can improve installation while still serve their primary purpose of retaining seal assemblies inside respective glands, as further discussed below. The present MIM-produced locking rings can be formulated to be within about 2-6% or greater of the elastic modulus of annealed parts using classic metalworking methods. In some examples, the value can be formulated to be within about 30%-45% of the elastic modulus of annealed parts using classic metalworking methods. For example, if the elastic modulus of an annealed part has a value of 6.8 x10⁷ kPA (10x10⁶ psi), the elastic modulus value of the MIM-produced part can be about 3.7 x10⁷ kPA (5.5 x10⁶ psi) to about 4.8 x10⁷ kPA (7x10⁶ psi).

A locking ring 104 made from a MIM process can be expected to have a reduced elastic modulus compared to a similar shaped locking ring made from nearly the same metal materials but via machining from a metal stock. The reduced elastic modulus metal injected molded locking ring 104 may be snap fit with a segment of the sealing ring or sealing element 102. Further, due to the reduced elastic modulus, the cantilever spring 126 can readily deflect to have a press fit with a stuffing box, gland, or seal box.

To produce a relatively constant force on the seal lip 110 of the inside flange 108 of the sealing ring or element 102, a spring energizer 106, such as a canted coil spring, may be used with the MIM-produced locking ring 104. The reduced elastic modulus of the metal injection molded locking ring 104 may aid the locking ring to be installed more easily and with less force as compared to that of a solid rolled or drawn metal locking ring of similar structure. For example, when two nearly identical locking rings are used with two nearly identical sealing elements and spring energizers are compared, one produced by a MIM process and the other by machining a metal stock produced by traditional metalworking methods, the MIM-produced locking ring with the cantilever spring 126 will be easier to install in a gland due to the relatively softer and more flexible material. Thus, by utilizing a locking ring 104 with a reduced elastic modulus, more consistent installation forces can be expected as slight dimensional variation in a lower elastic modulus material will have less impact on the required force for a press fit installation than the same dimensional variation in a higher elastic modulus material.

A MIM produced locking ring 104 with a reduced elastic modulus also allows wider tolerances when manufacturing the locking ring without drastic change of installation force due to the greater compressibility and deflection, and maintains intimate contact and 20 retention on a sealing surface within a housing bore. A wider tolerance may also reduce manufacturing costs and ease of manufacturing.

With reference now to FIGs. 10 and 11, images of metal grain sizes for a MIM produced metal object and from traditional metalworking methods, such as by the smelting of iron ore, are shown. The reduced elastic modulus metal injected molded locking ring 104 manufactured by metal injection molding process (MIM) produces a microstructure with larger grain sizes (See, FIG. 10) compared to rolled or drawn metal (See, FIG. 11). As shown in FIG. 10, an object made from 316L stainless steel using a MIM process has an average grain size of about 50µm compared to the average grain size of a round bar of the same material but produced by traditional metalworking methods of about 20µm. The larger average grain size for the material using the MIM process implies larger spacing between the grains, which results in a lower elastic modulus material.

With reference to FIG. 9, a table is shown with typical mechanical properties of 316L stainless steel achieved by a MIM process and rolled or drawn metal bars (hot or cold finished) according to ASTM B783 and ASTM A276, respectively. As shown in FIG. 9, the MIM process produces a structure having a material or mechanical property with a lower elastic modulus value than its rolled or drawn metal counterpart. Thus, locking rings 104 of the present disclosure made by a MIM process can be expected to require lower forces to deform the same amount as similarly shaped locking rings made of a machined rolled or drawn metal material. Therefore, lower insertion forces can be achieved with locking rings 104 made of MIM-produced elements when installing in a gland. For example, when inserting the seal assembly 100 of FIG. 1 into a stuffing box, a relatively lower force is needed to deflect the cantilever spring 126 of the locking ring 104 to set the seal assembly within the stuffing box than for a comparable seal assembly in which the locking ring is made from machined rolled or drawn metal material. Such characteristics may aid in lowering manufacturing costs as relatively looser tolerance is permitted, and allow greater ease of seal installation. For example, press fitting a reduced elastic modulus metal injection molded locking ring into a housing bore may not require as tight of a dimensional tolerance due to its more flexible characteristic.

In accordance with aspects of the present disclosure, locking rings as shown and described herein are formed by a MIM process in bulk, such as in a multi-cavity mold to form multiple locking ring parts or ring bodies for every injection cycle. After the locking rings are cooled and released from the mold, the locking rings require zero or little post injection machining to produce the final working components, such as shown in FIGs. 1-8 and 12-14. In another example, a MIM process yields bulk metal objects made by metal injection molding. The bulk metal objects made using the MIM process are then machined as necessary into a final working shape, such as to a final shape locking ring 104 resembling that of FIG. 1. With the reduced elastic modulus characteristic from the MIM process, the then machined MIM-produced bulk metal object produces a final shape locking ring that can provide the mentioned benefits as well as allow greater ease in fabricating compared to starting from a metal stock made from traditional metalworking methods. Said differently, a machined locking ring 104 of the present disclosure can have a reduced elastic modulus value when machining the locking ring from a bulk stock material made from a MIM process compared to from a metal stock made from traditional metalworking methods. The locking ring machined part can have any desired shape, including without a cantilever spring or with a cantilever spring, as further discussed below.

An aspect of the present disclosure is therefore understood to include a locking ring 104 for use with a seal ring 102, said locking ring being made at least in part from a MIM process and having a reduced elastic modulus value compared to a similar locking ring made from a machined rolled or drawn metal material. In some examples, the MIM-produced locking ring is produced with little to no post injection molding machining. By little, it is understood that the locking ring can be machined to have fine or precise machining surfaces or tolerances. In other examples, the MIM-produced locking ring is produced by obtaining a MIM processed bulk metal object and then machining the bulk metal object to a final shape/form for use as a locking ring in a seal assembly. For example, the OD, ID, and/or loading ring of a locking ring can be machined to final dimensions. In another example, the cantilever spring can be machined from the MIM processed bulk metal object to produce a final locking ring with a cantilever spring.

Further aspects of the present disclosure include a seal assembly 100 having a MIM-produced locking ring 104, a method for producing a locking ring 104 using MIM, a method of assembling a seal assembly with a MIM-produced locking ring 104, a method of using a MIM-produced locking ring 104, and a method of using a seal assembly 100 comprising a MIM-produced locking ring. The seal assembly 100 can include a seal ring, a locking ring, and a spring energizer. Optionally, a backing ring can further be incorporated to support the seal element from high pressure extrusion, such as a backing disclosed in U.S. Patent No. 9,234,591, the contents of which are expressly incorporated herein by reference. The backing ring can have an inside flange to support at least part of the inside flange of the seal element and can include a center channel section to support the center channel section of the seal element. Optionally, the seal element and the backing ring, when incorporated, can be mechanically engaged to one another. The MIM-produced locking ring 104 can comprise a locking ring having the desired shape formed from a mold cavity or from a MIM-produced bulk stock that has been machined.

With reference now to FIG. 2, a cross-section of an alternative seal assembly 100 is shown that is similar to the seal assembly of FIG. 1 and comprises a seal element 102, a locking ring 104, and a spring energizer 106. In the present seal assembly 100, the locking ring 104 is a MIM-produced locking ring 104 with a reduced elastic modulus value and without a cantilever. The locking ring 104 is assembled to a seal ring or seal element 102 and can include an optional spring energizer 106. The body 142 of the MIM-produced locking ring 104 can be wholly produced with little or no post injection machining, or by machining a MIM processed bulk metal object. Even without a cantilever spring and due to the relatively lower modulus of elasticity value, the MIM-produced locking ring 104 of the present embodiment can press fit into a gland or a housing without a cantilever spring.

FIG. 3 shows a cross-section of a seal assembly 100 that is similar to the seal assembly of FIG. 1 and comprises a seal element 102 and a locking ring 104 having a body 142. The present seal assembly utilizes a MIM-produced locking ring 104 with a reduced elastic modulus value and with a cantilever spring. In the seal assembly 100 of the present embodiment, a spring energizer can be omitted.

FIG. 4 shows a cross-section of a seal assembly 100 that is similar to the seal assembly of FIG. 1 and comprises a seal element 102 and a locking ring 104. The present seal assembly utilizes a MIM-produced locking ring 104 with a reduced elastic modulus value and is without a cantilever spring and without a spring energizer. Said differently, the present seal assembly 100 can be similar to the seal assembly of FIG. 2 but without a spring energizer. Optionally, a backing ring can be included to provide backing support for the seal element. The backing ring can optionally be included for any of the seal assemblies described herein.

FIG. 5 is a perspective view showing an embodiment of a MIM-produced locking ring 104 comprising a cantilever spring 126 produced through or by direct injection molding in a mold cavity or by machining a MIM-produced bulk material object. Where a MIM-produced locking ring 104 is obtained or manufactured by direct injection of a MIM feedstock, the end product may further be machined to modify the molded shape from a first molded shape to a second shape formed by machining. Said differently, a locking ring of the present invention for use with a seal element can have a first shape formed by a metal injection molding (MIM) process and a second shape formed by machining, such as with a lathe or a computer numerical control (CNC) machine. In some examples, the locking ring has a final shape formed by a metal injection molding (MIM) process without any machining.

FIG. 6 shows cross-sectional side view of the locking ring 104 of FIG. 5 comprising a cantilever spring 126. The various contours and shapes of the locking ring can be adjusted or modified to fit different seal elements, different spring energizers, and/or different sealing applications. For example, the inside surface 123 of the loading ring 122 can be injection molded and/or machined to accommodate different energizers and the outside surface 127 of the loading ring 122 can be molded and/or machined to engage seal elements having different shaped outside flanges. As shown, the outside surface 127 of the locking ring can be provided with a groove for latching or locking engagement with the outside flange of the sealing element, such as the radial inward projection of the outside flange.

FIG. 7 is a perspective view showing an embodiment of a locking ring 104 similar to that of FIGs. 5 and 6 but without a cantilever spring. Thus, like the locking ring of FIGs. 5 and 6, the locking ring of the present embodiment for use with a seal element can have a first shape formed by a metal injection molding (MIM) process and a second shape formed by machining, such as with a lathe or a computer numerical control (CNC) machine. In some examples, the locking ring has a final shape formed by a metal injection molding (MIM) process without any machining.

FIG. 8 shows a cross-sectional side view of the locking ring 104 of FIG. 7 without a cantilever spring.

With reference now to FIGs. 12-14, a locking ring 104 in accordance to further aspects of the invention are shown. In the figures, FIG. 12 shows a perspective view of the alternative locking ring 104, FIG. 13 shows a side view of the locking ring of FIG. 12, and FIG. 13 shows an end view of the locking ring of FIG. 12. As shown, the locking ring 104 has an end plate 124 and a loading ring 122 with an exterior surface 127 and an interior surface 123, both relative to the center of the bore 120. The locking ring 104 is similar to the locking ring of FIGs. 7 and 8 in that the cantilever spring is omitted. Optionally, a cantilever spring 126 can be included and the alternative locking ring of the present embodiment of FIGs. 12-14 resembling the locking ring of FIGs. 5 and 6. The present locking ring 104 can be used with a seal element in a seal assembly. The seal assembly can include a spring energizer 106.

The present locking ring can be a MIM-produced locking ring 104 produced through or by direct injection molding in a mold cavity or by machining a MIM-produced bulk material object. Optionally, the present locking ring of FIGs. 12-14 can be machined from a metal stock made from traditional metalworking methods. Where the MIM-produced alternative locking ring 104 is obtained or manufactured by direct injection of a MIM feedstock, the end product may further be machined to modify the molded shape from a first molded shape to a second shape formed by machining. Said differently, a locking ring of the present embodiment for use with a seal element can have a first shape formed by a metal injection molding (MIM) process and a second shape formed by machining, such as with a lathe or a computer numerical control (CNC) machine. In some examples, the locking ring of the present embodiment has a final shape formed by a metal injection molding (MIM) process without any machining. Thus, the present locking ring 104 is similar to other locking rings discussed elsewhere herein with reference to FIGs. 1-11. However, in the present embodiment, a through cut 140 is provided through the body 142 of the locking ring 104. More specifically, a through cut can be formed through the end plate 124 and through the loading ring 122 to form or to convert the locking ring into a split ring type locking ring. Said differently, in the present embodiment, the body 142 of the locking ring is not continuous along the circumference of the body about the center of the bore 120 to produce a flexible locking ring, whether made from a MIM-produced material or from a metal stock formed from traditional metalworking methods. The through cut 140 allows the locking ring 104 to expand or contract at the cut and be more flexible than a ring without a cut. The ring with the cut has a much lower hoop stress than the ring without the cut.

In an example, the through cut 140 can be made following the MIM process to produce the locking ring or following machining of the locking ring from a metal stock. The cut 140 can be a simple straight cut in which the cut line is substantially parallel to the bore centerline. In an alternative embodiment, the through cut 140 is a scarf cut in which the cut line is angled to the bore centerline. A scarf cut can resemble a cut made to join two length sections together, such as to join two wood sections together. The split ring type locking ring 104 of the present embodiment has lower compression and expansion characteristics, in addition to the relatively lower modulus of elasticity as a result of being formed by a MIM process. Thus, the present split ring type locking ring 104 is more flexible than a conventional solid metal locking ring formed by machining a metal stock made from traditional metalworking methods and without a through cut. The present split ring type locking ring 104 can also be more flexible than MIM-produced locking rings without a through cut 140. The increased flexible characteristics of the present split ring type locking ring allows for easier installation and wider tolerances.

Thus, a locking ring of the present embodiment can be used with a seal element in a seal assembly and wherein a ring body 142 of the locking ring can comprise a through cut to define a split ring. The through cut can form through the outermost diameter of the ring body to the innermost diameter of the ring body to form a locking ring that is more flexible compared to a similar ring body without said cut.

The present embodiment includes a method of improving ease of installation of a locking ring in a seal assembly comprising manufacturing a flexible locking ring comprising a ring body and making a through cut through said ring body from an outermost diameter to an innermost diameter of said ring body. Said ring body can include a cantilever spring. Said ring body can include a loading ring. Said loading ring can include an inner surface and an outer surface. Said outer surface can include a groove for latching or locking engagement with a projection on a seal element, similar to that shown in FIG. 1.

The present embodiment includes a method of improving ease of manufacturing of a locking ring in a seal assembly comprising manufacturing a flexible locking ring comprising a ring body and making a through cut through said ring body from an outermost diameter to an innermost diameter of said ring body to allow for widened tolerances and reduction in installation force required to mount the locking ring, and hence a seal assembly, inside a gland or a housing.

With reference now to FIGs. 15A-15B, a front view and a side view, respectively, of a wire loop element 150. In an example, the wire loop element 150 is formed by coiling a wire 152, such as a metal wire, into a loop to form a loop body 154 with at least one full revolution with two free ends, similar to a key chain ring. In example, the wire can form 1.1 to greater number of revolutions to produce the wire loop element 150 of the present embodiment with two free ends 156 (FIG. 15B). In some examples, the wire can form 1.6 or more revolutions, such as two to three revolutions, to produce the wire loop element 150 of the present embodiment with two free ends 156. The wire loop element 150 of the present embodiment with two free ends 156 is more flexible to a similar wire loop element but where the two ends are connected or are not free to independently move.

The wire loop element 150 of the present embodiment can function like a locking ring 104 described elsewhere herein. For example, the wire loop element 150 of the present embodiment can function like a split ring type locking ring of FIGs. 12-14 in that the two free ends 156 allow the loop body 154 of the wire loop element 150 to be compressed or expanded. Using the loop body's ability to compress or expand, the biasing force generated thereby can provide a load on a seal element, similar to that of the locking rings discussed elsewhere herein. For example and with reference to FIG. 1, the wire loop element 150 can be sized to fit in the spring groove 116, between the inside flange 108 and the outside flange 112 of the seal element 102, to exert an outward force against the inner surface of the outside flange so as to bias the outside flange against a gland or a housing. Alternatively, the wire loop element 150 can be sized to fit in the spring groove 116, between the inside flange 108 and the outside flange 112 of the seal element 102, to exert a radial force against the inner surface of the inside flange so as to bias the inside flange against a shaft.

The wire loop element 150 of the present embodiment provides similar functions to a locking ring but may be made from wire and thus easily produced, allowing for easier installation and wider tolerances. In an example, the sealing component or seal element 102 is provided with a groove, such as on the inside flange or the outside flange of the sealing element, for capturing said wire loop element 150.

An aspect of the present therefore includes a method of improving ease of installation of a locking ring in a seal assembly comprising manufacturing a flexible locking ring comprising a wire loop element having at least one full revolution with two free ends and forming said wire loop element such that the loop body of said wire loop element is compressible or expandable to a smaller or larger diameter, respectively.

An aspect of the present disclosure further includes a method of improving ease of manufacturing of a locking ring in a seal assembly comprising manufacturing a flexible locking ring comprising a wire loop element having at least one full revolution with two free ends and forming said wire loop element such that the loop body of said wire loop element is compressible or expandable to a smaller or larger diameter, respectively, and allowing for widened tolerances and without significantly increased installation force.

Methods of using a locking ring, of making a locking, and of assembling a locking ring, such as one of the locking rings disclosed herein with a seal element in a seal assembly, are considered within the scope of the present invention.

Although limited embodiments of seal assemblies and their components have been specifically described and illustrated herein, including MIM-produced locking rings and locking rings with a through cut, many modifications and variations will be apparent to those skilled in the art. Accordingly, it is to be understood that the seal assemblies and their components constructed according to principles of the disclosed devices, systems, and methods may be embodied other than as specifically described herein. The disclosure is defined in the following claims.

## Claims

1. A seal assembly (100) comprising:
a sealing element (102) comprising a seal body (103) comprising an inside flange (108) with a sealing lip (110), an outside flange (112), and a center channel section (114) located between the inside and outside flanges; and
a locking ring (104) comprising a ring body having a loading ring (122) extending from an end plate (124), wherein the locking ring (104) is in contact with the sealing element (102) and wherein the loading ring is located between the inside flange and the outside flange and the ring body being **characterized by**:
said ring body being made of 316L stainless steel manufactured by metal injection molding (MIM) and having an elastic modulus of about 117 GPa to about 138 GPa.

2. The seal assembly of claim 1, wherein said seal body (103) defines a spring groove (116).

3. The seal assembly of claim 2, further comprising a cantilever spring (126) extending from the end plate (124) of the ring body.

4. The seal assembly of claim 2, further comprising a spring energizer (106) located between the loading ring (122) of the locking ring (104) and the inside flange (108) of the sealing element (102).

5. The seal assembly of claim 4, wherein the spring energizer (106) is a canted coil spring, a V-spring, a U-spring, a ribbon spring, or an extension spring.

6. The seal assembly of claim 1, wherein the ring body of the locking ring comprises a through cut from an outermost diameter to an innermost diameter of the ring body.

7. A method of manufacturing a seal assembly (100) comprising
manufacturing a locking ring (104); and
attaching the locking ring (104) to a sealing element (102) between an inside flange and an outside flange of the sealing element fitting the locking ring to a seal ring between an inside flange (108) and an outside flange (112) of the sealing element;
wherein the manufacturing of the locking ring is **characterized by**:
forming a mold block having at least one mold cavity that forms a locking ring body;
injecting a MIM feedstock comprising powder metallurgy into the at least one cavity to produce the locking ring body; and
removing the locking ring body from the mold block.

8. The method of manufacturing of claim 7, wherein the locking ring body comprises a loading ring (122) extending from an end plate (124).

9. The method of manufacturing of claim 8, further comprising forming a sealing element (102) comprising a seal body (103) comprising the inside flange (108) with a sealing lip (110), the outside flange (112), and a center channel section (114) located between the inside and outside flanges, said seal body defining a spring groove (116).

10. The method of manufacturing of claim 8, wherein the manufacturing of the locking ring further comprises forming a through cut through the locking ring body (104) from an outermost diameter to an innermost diameter of the locking ring body (104).

11. The method of manufacturing of claim 8, further comprising molding a cantilever spring (126) with the end plate or machining a cantilever spring into the end plate.

12. The method of manufacturing of claim 8, further comprising placing a canted coil spring (106), a V-spring, a U-spring, a ribbon spring, or an extension spring in between the loading ring (122) of the locking ring (104) and the inside flange (108) of the sealing element (102).

## Patentansprüche

1. Versiegelungsgruppe (100), umfassend:
ein Versiegelungselement (102), umfassend einen Versiegelungskörper (103), umfassend einen Innenflansch (108) mit einer Versiegelungslippe (110), einen Außenflansch (112) und einen zentralen Kanalabschnitt (114), der zwischen dem Innen- und dem Außenflansch angeordnet ist; und
einem Sperrring (104), umfassend einen Ringkörper mit einem Ladering (122), der sich von einer Endplatte (124) erstreckt, wobei der Sperrring (104) mit dem Versiegelungselement (102) in Kontakt ist und wobei der Ladering zwischen dem Innenflansch und dem Außenflansch angeordnet ist und der Ringkörper **dadurch gekennzeichnet ist, dass**;
der genannte Ringkörper aus 316L Edelstahl per Metallpulverspritzgießen (MIM) hergestellt ist und ein elastisches Modul von ungefähr 117 GPa bis ungefähr 138 GPa aufweist.

2. Versiegelungsgruppe gemäß Anspruch 1, wobei der genannte Versiegelungskörper (103) eine Federnut (116) definiert.

3. Versiegelungsgruppe gemäß Anspruch 2, weiterhin umfassend eine Auslegerfeder (126), die sich von der Endplatte (124) des Ringkörpers erstreckt.

4. Versiegelungsgruppe gemäß Anspruch 2, weiterhin umfassend ein Federenergieversorgungsorgan (106), der zwischen dem Ladering (122) des Sperrrings (104) und dem Innenflansch (108) des Versiegelungselements (102) angeordnet ist.

5. Versiegelungsgruppe gemäß Anspruch 4, wobei das Federenergieversorgungsorgan (106) eine abgefaste Springfeder, eine V-Feder, eine U-Feder, eine Bandfeder oder eine Zugfeder ist.

6. Versiegelungsgruppe gemäß Anspruch 1, wobei der Ringkörper des Sperrrings einen durchgehenden Schnitt von einem äußersten Außendurchmesser zu einem innersten Innendurchmesser des Ringkörpers umfasst.

7. Herstellungsverfahren einer Versiegelungsgruppe (100), umfassend Herstellung eines Sperrrings (104); und
Befestigen des Sperrrings (104) an einem Versiegelungselement (102) zwischen einem Innenflansch und einem Außenflansch des Versiegelungselements, das den Sperrring an einem Versiegelungsring zwischen einem Innenflansch (108) und einem Außenflansch (112) des Versiegelungselements anpasst;
wobei das Herstellen des Sperrrings **dadurch gekennzeichnet ist, dass**:
Bilden eines Formblockes mit wenigstens einer Formausnehmung, die einen Sperrring-Körper bildet;
Einspritzen eines MIM-Einsatzmaterials, umfassend Pulvermetallurgie, in wenigstens eine Ausnehmung zum Produzieren eines Sperrring-Körpers; und
Entfernen des Sperrring-Körpers vom Formblock.

8. Herstellungsverfahren gemäß Anspruch 7, wobei der Sperrring-Körper einen Ladering (122) umfasst, der sich von einer Endplatte (124) erstreckt.

9. Herstellungsverfahren gemäß Anspruch 8, weiterhin umfassend das Bilden eines Versiegelungselements (102), umfassend einen Versiegelungskörper (103), umfassend den Innenflansch (108) mit einer Versiegelungslippe (110), den Außenflansch (112) und einen zentralen Kanalabschnitt (114), der zwischen dem Innen- und dem Außenflansch angeordnet ist, wobei der genannte Versiegelungskörper eine Federnut (116) definiert.

10. Herstellungsverfahren gemäß Anspruch 8, wobei das Herstellen des Sperrrings weiterhin das Bilden eines durchgehenden Schnitts durch den Sperrring-Körper (104) von einem äußersten Durchmesser zu einem innersten Durchmesser des Sperrring-Körpers (104) umfasst.

11. Herstellungsverfahren gemäß Anspruch 8, weiterhin umfassend das Formen einer Auslegerfeder (126) mit der Endplatte oder das Bearbeiten einer Auslegerfeder in der Endplatte.

12. Herstellungsverfahren gemäß Anspruch 8, weiterhin umfassend das Platzieren einer abgefasten Springfeder (106), einer V-Feder, einer U-Feder, einer Bandfeder oder einer Zugfeder zwischen dem Ladering (122) des Sperrrings (104) und dem Innenflansch (108) des Versiegelungselements (102).

## Revendications

1. Ensemble joint d'étanchéité (100) comprenant :
un élément d'étanchéité (102) comprenant un corps de joint d'étanchéité (103) comprenant une bride intérieure (108) avec une lèvre d'étanchéité (110), une bride extérieure (112), et une portion de canal centrale (114) située entre les brides intérieure et extérieure ; et
une bague de verrouillage (104) comprenant un corps de bague ayant une bague de chargement (122) partant d'une plaque d'extrémité (124), dans lequel la bague de verrouillage (104) est en contact avec l'élément d'étanchéité (102) et dans lequel la bague de chargement est située entre la bride intérieure et la bride extérieure et le corps de bague est **caractérisé en ce que** :
ledit corps de bague est constitué d'acier inoxydable 316L fabriqué par moulage par injection de métal (MIM) et ayant un module d'élasticité d'environ 117 GPa à environ 138 GPa.

2. Ensemble joint d'étanchéité selon la revendication 1, dans lequel ledit corps de joint d'étanchéité (103) définit une rainure de ressort (116).

3. Ensemble joint d'étanchéité selon la revendication 2, comprenant en outre un ressort en porte-à-faux (126) partant de la plaque d'extrémité (124) du corps de bague.

4. Ensemble joint d'étanchéité selon la revendication 2, comprenant en outre un organe d'alimentation en énergie à ressort (106) situé entre la bague de chargement (122) de la bague de verrouillage (104) et la bride intérieure (108) de l'élément d'étanchéité (102).

5. Ensemble joint d'étanchéité selon la revendication 4, dans lequel l'organe d'alimentation en énergie à ressort (106) est un ressort à spirales inclinées, un ressort en V, un ressort en U, un ressort à ruban, ou un ressort d'extension.

6. Ensemble joint d'étanchéité selon la revendication 1, dans lequel le corps de bague de la bague de verrouillage comprend une découpe traversante d'un diamètre le plus externe à un diamètre le plus interne du corps de bague.

7. Procédé de fabrication d'un ensemble joint d'étanchéité (100) comprenant la fabrication d'une bague de verrouillage (104) ; et
la fixation de la bague de verrouillage (104) à un élément d'étanchéité (102) entre une bride intérieure et une bride extérieure de l'élément d'étanchéité ajustant la bague de verrouillage sur une bague de joint d'étanchéité entre une bride intérieure (108) et une bride extérieure (112) de l'élément d'étanchéité ;
dans lequel la fabrication de la bague de verrouillage est **caractérisée par** :
la formation d'un bloc de moule ayant au moins une cavité de moule qui forme un corps de bague de verrouillage ;
l'injection d'une charge d'alimentation MIM comprenant de la métallurgie des poudres dans au moins une cavité pour produire le corps de bague de verrouillage ; et
l'enlèvement du corps de bague de verrouillage du bloc de moule.

8. Procédé de fabrication selon la revendication 7, dans lequel le corps de bague de verrouillage comprend une bague de chargement (122) partant d'une plaque d'extrémité (124).

9. Procédé de fabrication selon la revendication 8, comprenant en outre la formation d'un élément d'étanchéité (102) comprenant un corps de joint d'étanchéité (103) comprenant la bride intérieure (108) avec une lèvre d'étanchéité (110), la bride extérieure (112), et une portion de canal centrale (114) située entre les brides intérieure et extérieure, ledit corps de joint d'étanchéité définissant une rainure de ressort (116).

10. Procédé de fabrication selon la revendication 8, dans lequel la fabrication de la bague de verrouillage comprend en outre la formation d'une découpe traversante à travers le corps de bague de verrouillage (104) d'un diamètre le plus externe à un diamètre le plus interne du corps de bague de verrouillage (104).

11. Procédé de fabrication selon la revendication 8, comprenant en outre le moulage d'un ressort en porte-à-faux (126) avec la plaque d'extrémité ou l'usinage d'un ressort en porte-à-faux dans la plaque d'extrémité.

12. Procédé de fabrication selon la revendication 8, comprenant en outre le placement d'un ressort à spirales inclinées (106), d'un ressort en V, d'un ressort en U, d'un ressort à ruban, ou d'un ressort d'extension entre la bague de chargement (122) de la bague de verrouillage (104) et la bride intérieure (108) de l'élément d'étanchéité (102).
